# EUROPÄISCHE PATENTSCHRIFT

(11) **EP 1 803 505 B1**
(45) Veröffentlichungstag und Bekanntmachung des Hinweises auf die Patenterteilung: **28.03.2012**
(21) Anmeldenummer: 06026113.8
(22) Anmeldetag: 16.12.2006
(51) Int. Cl.: B08B 9/04, H02H 7/08

(54) **Verfahren zum Steuern der Antriebsleistung einer elektromotorischen Reinigungsmaschine und Reinigungsmaschine hierfür**
process to control the power unit of a cleaning machine and cleaning machine
processus pour controler l'unité de puissance d'une machine de nettoyage et machine de nettoyage utilisant ce processus

(30) Priorität: 03.01.2006 DE 102006000653
(43) Veröffentlichungstag der Anmeldung: 04.07.2007
(73) Patentinhaber: Rothenberger AG, 65779 Kelkheim (DE)
(72) Erfinder: Greding Arnd, 45476 Mühlheim / Ruhr (DE)
(74) Vertreter: Mill, Andreas

(56) Entgegenhaltungen:
- US-A- 5 199 129
- US-A- 6 047 431

## Beschreibung

Die Erfindung betrifft ein Verfahren zum Steuern der Antriebsleistung einer elektromotorischen Reinigungsmaschine nach dem Oberbegriff des Patentanspruchs 1.

Verstopfungen von Rohrleitungen und Kanälen für Abwässer und Regenwasser, kurz Rohre genannt, sind ein lästiges aber häufiges Vorkommnis. Die Ursachen sind vielfältig: Weggespülte Haushaltstücher aus Papier und textilem Material, feste Stoffe wie Hygieneprodukte, erstarrte Reste von Baustoffen wie Gips, Zement und Farbe, Verkrustungen durch Kalk und - nicht zuletzt - Pflanzenwurzeln, die sich auf der Suche nach Wasser durch Verbindungsstellen von Rohrleitungen hindurch arbeiten, sich danach verzweigen und wiederum als Fangvorrichtungen für die vorgenannten Verunreinigungen dienen. Auch Rohrverengungen, Rohrkrümmer und unsauber verlegte Rohre erweisen sich als unerwünschte Fangvorrichtungen.

Die letzte Rettung sind in solchen Fällen die bekannten Rohrreinigungsmaschinen mit rotierenden Federwellen, die sich durch die Leitungen hindurchschlängeln, in der Branche auch als Reinigungsspiralen bezeichnet werden, und an deren Enden unterschiedliche Reinigungswerkzeuge befestigt werden. Dabei ist zu beachten, dass die unterschiedlichen Arten von Verstopfungen und Werkzeugen erheblich unterschiedliche Antriebskräfte und auch einen unterschiedlichen zeitlichen Kräfteverlauf während des Reinigungsvorgangsvorgangs bedingen.

Bei Rohrreinigungsmaschinen mit Federwellen sind diese ein kritisches Element, das auch das Betriebsverhalten entscheidend beeinflusst. An ihrem Antriebsende sind diese Federwellen in einer motorisch angetriebenen Trommel gelagert und aus dieser durch einen Führungskopf vorschiebbar und auch wieder in die Trommel zurück ziehbar. An ihrem Abtriebsende tragen sie auswechselbare Reinigungswerkzeuge, die sich unter Aufbringung hoher und stark variierender Drehmomente durch die Rohrverstopfungen hindurcharbeiten. Zu diesen Reinigungswerkzeugen gehören u. a. Rückholbohrer, Sägezahn-Schneidköpfe, Kreuzblattbohrer, Wurzelschneider, Ketten-Schleuderköpfe mit Spikes, Keulenbohrer, Trichterbohrer, Schaufelbohrer und Hartmetall-Bohrköpfe.

Hierbei spielen die Massenträgheit der Trommel und die Federcharakteristik der Federwelle eine entscheidende Rolle, die beide ein unerwünschter Energiespeicher für die Antriebsleistung sind. Dies ist so lange erträglich, wie das maximale Drehmoment für eine gestreckte Führung der Federwelle nicht überschritten wird. Geschieht dies jedoch, dann bildet die Federwelle auf ihrem freien Wege eine a-förmigen Verschlingung, die schlagende Bewegungen ausführt und eine weitere Bewegung blockiert, wobei gelegentlich auch die Verschlingung nicht wieder aufhebbar ist und die Federwelle durch bleibende Verformung unbrauchbar wird. In jedem Falle führen plötzliche Entlastungen der Federwelle beim Durchbruch der Rohrverstopfungen zu Hochgeschwindigkeits-Rotationen, die auch die Reinigungswerkzeuge mechanisch und thermisch belasten, zumal dann auch der Antriebsmotor seine Drehzahl steigert. Es ist vor allem die Trommel mit ihrem unterschiedlichen Inhalt an Federwellen-Länge, die das Massenproblem entscheidend beeinflusst.

Dies führt zu folgender Problemstellung: Bekannt sind nur die Geometrie und die generelle Arbeitsweise der Werkzeuge. Der Momentenbedarf resultiert aber aus der Summe der Momente des Reinigungsvorgangs und der Reibung ausserhalb der Trommel bis zum Werkzeug, die ein Gegendrehmoment bilden, das durch den Motor überwunden werden muss. Hierbei spielen auch die Länge der Federwelle und Kupplungen zwischen Abschnitten der Federwelle eine entscheidende Rolle. Dies teilt sich dem Motor am Antriebsende aber nur verzögert und verzerrt mit. Dort sind es wiederum die Trägheitsmomente von Trommel mit Inhalt und Motor, die einer kurzfristigen und exakten Regelung entgegen stehen. Solche Probleme treten bei starr mit einem Antrieb verbundenen Werkzeugen nicht auf.

Durch die US 5 199 129 ist es bei einer Rohrreinigungsmaschine mit Trommel, flexibler Reinigungswelle, Werkzeug und Antriebsmotor bekannt, zur überwachung und Begrenzung des Drehmoments eine Erfassung der Stromaufnahme durchzuführen und bei überschreitung eines vorgegebenen Drehmoments den Stromkreis durch einen Stromwandler und ein Schaltrelais zu unterbrechen und bei Unterschreitung dieses Drehmoments den Stromkreis wieder zu schliessen. Es handelt sich also um eine Ein-Aus-Schaltung bzw. einen Zweipunkt-Regler, wobei der Schaltzustand auch optisch und akustisch angezeigt werden kann. Die Bedienungsperson ist gehalten, diese Signale zu beachten und ggf. auch den manuellen Vorschub der Reinigungswelle zu verringern oder anzuhalten oder die Reinigungswelle sogar zurück zu ziehen. Mittels eines Fuss-Schalters kann auch eine elektrische Bremsvorrichtung ausgelöst werden. Das ist weit entfernt von einer Automatisierung und von einer Möglichkeit der Anpassung der Motorleistung und des Abtriebsdrehmoments. Die Schrift geht von der überlegung aus, die vorbekannten mechanischen Schlupfkupplungen abzulösen.

Durch die US-PS 6,047,431 ist es für medizinische Zwecke bekannt, in einem Patienten befindliche Kanäle von den Hinterlassenschaften eines Endoskops zu befreien, das zuvor in diese Kanäle eingeführt wurde. Dazu dient ein Schlauch aus Kunststoff, durch den eine dünne Welle von einem Antriebsmotor bis unmittelbar zu einem Bürstenkopf geführt wird, der aus Nylonfasern und Metalldrähten bestehen kann. Der Schlauch ist ferner an eine Flüssigkeitsquelle angeschlossen und dient zur Zufuhr einer Reinigungsflüssigkeit bis unmittelbar zum Bürstenkopf. Mittel und Massnahmen zur belastungsabhängigen Drehzahlregelung des Antriebmotors sind nicht offenbart.

Die Welle besteht nicht aus einer Federwelle in Schraubenform, wird nicht in einer Trommel gelagert, aus dieser abgezogen und wieder in diese zurück geführt. Bei dem bekannten medizinischen Gerät stellen sich nicht folgende Probleme:
a) stark variierende Antriebsmomente durch unbekannte Verstopfungen,
b) die unterschiedlichen Massenträgheiten einer rotierenden Trommel mit der jeweils darin gespeicherten Länge der Federwelle
c) die Federcharakteristik der Federwelle, die gleichfalls ein Energiespeicher ist,
d) das radiale Offenliegen der Federwelle im Kanal,
e) die Gefahr einer α-förmigen Verschlingung der Federwelle beim überschreiten eines kritischen Drehmoments und die Zerstörung der Federwelle,
f) der Einfluss einer beliebigen Verlängerung der Federwelle,
g) die Verwendung schwerer Werkzeuge am Ende der Federwelle,
h) die Verzögerung eines Regeleingriffs durch die Massenträgheit des entsprechend starken Antriebsmotors und der schweren Trommel,
i) der Ausgleich einer Drehzahlsteigerung von Motor und Trommel nach Beseitigung einer örtlich begrenzten Verstopfung,
j) die Vermeidung einer thermischen Beschädigung der Werkzeuge durch Hoch-Geschwindigkeitsrotation nach i),
k) die Auswechselbarkeit unterschiedlicher Reinigungswerkzeuge,
l) die Beherrschung von Feder-Masse-Problemen zwischen Antriebsmotor und Trommel mit Federwelle und Federwelle selbst.

Diese Probleme sind in dem obigen Dokument weder beschrieben, noch werden sie angeregt. Die Regeleinrichtung 112 kann ein EIN-/AUS-Schalter sein oder ein Drehzahlregler, der aber die vorstehenden Probleme nicht löst.

Durch die DE 196 09 986 A1 sind ein Verfahren und eine Schaltungsanordnung zum Betrieb eines Elektromotors in einem Elektrohandwerkzeug bekannt, wobei die Erläuterung der Funktion jedoch im wesentlich auf Elektroschrauber beschränkt ist, durch die mehrere Schrauben bündig in Werkstücke aus Holz eingeschraubt werden sollen. Zu diesem Zweck werden eine erste Drehzahl und ein erstes Grenz-Drehmoment vorgegeben, mit dem die Schrauben über ihre wesentliche Länge, aber nicht bündig, eingeschraubt werden. Durch ggf. mehrere zeitlich gestufte Nachdrehmomente, die wenigstens die Grösse des ersten Grenz-Drehmoments haben und haben müssen, soll dem Benutzer Gelegenheit gegeben werden, sein Arbeitsergebnis zu beobachten, die Schraubvorgänge fortzusetzen und bei Bündigkeit der Schraubenköpfe im Werkstück abzubrechen. Dabei werden alternierend Drehzahlen eingesetzt, die geringer bis grösser als die erste Drehzahl sind. Drehzahlmesser enthält die Anordnung nicht, vielmehr wird die Drehzahl durch die zugeführte Steuerspannung repräsentiert. Elastische Zwischenglieder sind nicht vorgesehen. Eine solche Anordnung würde bei einem Feder-Masse-System wie einer Maschine zur Rohrreinigung mittels einer Federwelle durch die Momenten-Impulse zum Aufschaukeln führen und wäre auch aus dem Grunde für eine solche Anwendung unbrauchbar, weil die Arbeitsergebnisse in Rohren versteckt stattfinden und nicht visuell zu beobachten sind. Diese Lösung führt von der Erfindung weg.

Der Erfindung liegt daher die Aufgabe zugrunde, die Nachteile des Standes der Technik zu vermeiden und eine Steuerung bzw. Regelung anzugeben, die den Besonderheiten des Reinigungsbetriebes, der Federwelle, den Reinigungswerkzeugen und den Problemen des Feder-Masse-Systems der Anordnung mit der Trommel Rechnung trägt.

Die Lösung der gestellten Aufgabe erfolgt erfindungsgemäss durch die Merkmale im Kennzeichen des Patenanspruchs 1.

Durch diese Lösung wird die gestellte Aufgabe in vollem Umfange gelöst, und es werden eine Steuerung bzw. Regelung angegeben, die den Besonderheiten des Reinigungsbetriebes, der Federwelle, den Reinigungswerkzeugen und dem Feder-Masse-System der gesamten Anordnung Rechnung trägt. Dabei werden die Motorleistung, das Drehmoment und die Drehzahl von Federwelle und Werkzeug stufenweise oder kontinuierlich den Bedürfnissen der unkontrollierbaren und unvorhersehbaren Verstopfungen und dem unterschiedlichen Zustand und Verlauf der Rohrleitungen und Kanäle automatisch angepasst, und Dissonanzen zwischen dem Antrieb und den Werkzeugen werden so weit wie möglich ausgeglichen.

Es ist im Zuge weiterer Ausgestaltungen des Verfahrens besonders vorteilhaft, wenn - entweder einzeln oder in Kombination - die Merkmale nach den auf das Verfahren bezogenen Unteransprüchen angewandt werden.

Ein Asynchron-Motor hat folgende, bekannte, Betriebseigenschaften: Der Läufer hat die Tendenz, sich im Leerlauf einer Drehzahl zu nähern, die der Netzfrequenz, geteilt durch die Polpaarzahl entspricht. Hierbei hat die Stromaufnahme ein Minimum. Unter zunehmender Belastung sinkt die Drehzahl, und die Stromaufnahme folgt bis zum Stillstand einer hyperbelförmigen Kurve. Stets wird - bis zum Stillstand - eine sogenannte Schlupfdrehzahl aufrecht erhalten. Die Spannungs- und Leistungssteuerung erfolgt meist über sogenannte TRIACS, das sind in die Motorzuleitungen eingeschaltete Drehstromsteller, die über den Phasenanschnitt den Spannungseffektivwert verändern. Die Erfindung macht sich dieses Prinzip zunutze.

Die Erfindung betrifft auch eine Reinigungsmaschine zum Reinigen von Rohrleitungen und Kanälen nach dem Oberbegriff des Patentanspruchs 8.

Zur Lösung der gleichen Aufgabe zur Erzielung der gleichen Vorteile ist dieser Teil der Erfindung gekennzeichnet durch die Merkmale im Kennzeichen des Patentanspruchs 8.

Es ist im Zuge weiterer Ausgestaltungen der Reinigungsmaschine besonders vorteilhaft, wenn - entweder einzeln oder in Kombination - die Merkmale nach den zugehörigen Unteransprüchen eingesetzt werden.

Ein Ausführungsbeispiel des Erfindungsgegenstandes und dessen Wirkungsweise und weitere Vorteile werden nachfolgend anhand der Figuren 1 bis 5 näher erläutert.

Es zeigen:
- Figur 1: eine Prinzipdarstellung der wesentlichen Elemente einer Reinigungsmaschine mit einer Antriebssteuereinrichtung,
- Figur 2: einen Ausschnitt aus Figur 1 in vergrössertem Massstab,
- Figur 3: einen Axialschnitt durch eine Rohrleitung im Bereich der Einwirkung der Federwelle mit einem Reinigungswerkzeug auf eine Verstopfung,
- Figur 4: ein Diagramm mit der Zeit "t" auf der Abszisse und Drehzahlen "n" auf der Ordinate und mit zwei Bereichen B1 und B2 für Drehzahlen zum Schlichten oder Schruppen bei Vorgängen gemäss Figur 3 und
- Figur 5: ein Diagramm mit Kurven für Drehzahlen "n", Leistungen "E" und Wirkungsgraden "E" auf der Ordinate über den Drehmomenten "M" auf der Abszisse.

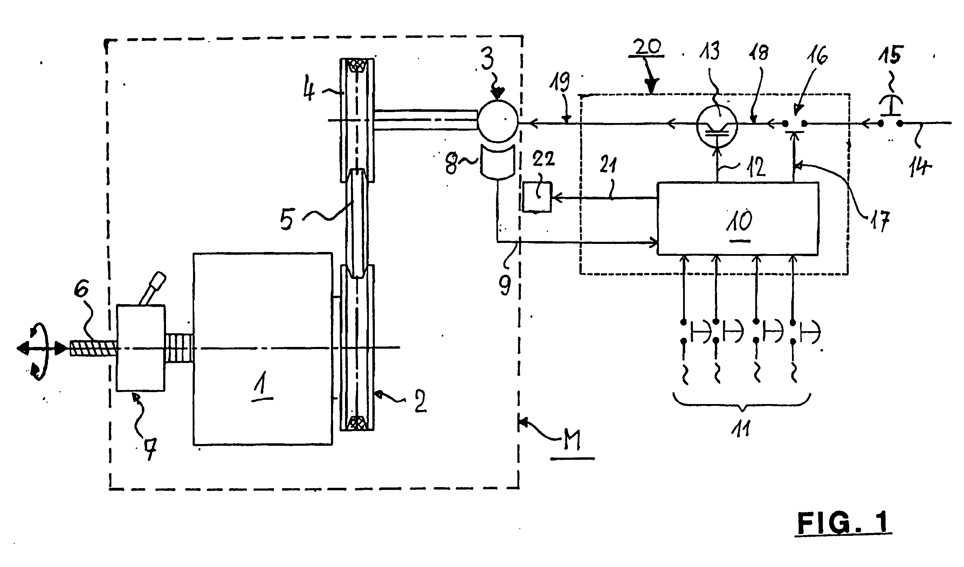

In Figur 1 ist links - ohne das übliche Fahr- oder Traggestell - eine Reinigungsmaschine M für Rohrleitungen und Kanäle dargestellt, zu der eine drehbare Trommel 1 mit einer ersten Riemenscheibe 2 und ein elektrischer Motor 3 mit einer zweiten Riemenscheibe 4 gehören. Der Motor 3 ist vorzugsweise ein Asynchronmotor. Die Riemenscheiben 2 und 4 sind durch einen Keilriemen 5 schlupffrei verbunden. In der Trommel 1 befindet sich eine der üblichen Federwellen 6, die aus einer stählernen Schraubenfeder besteht, die in Fachkreisen auch als Reinigungsspirale bezeichnet wird. Der Trommel 1 ist eine bekannte stationäre Vorschubeinrichtung 7 vorgeschaltet, die einen Vorschub oder Rückzug in Richtung der Doppelpfeile bewirkt.

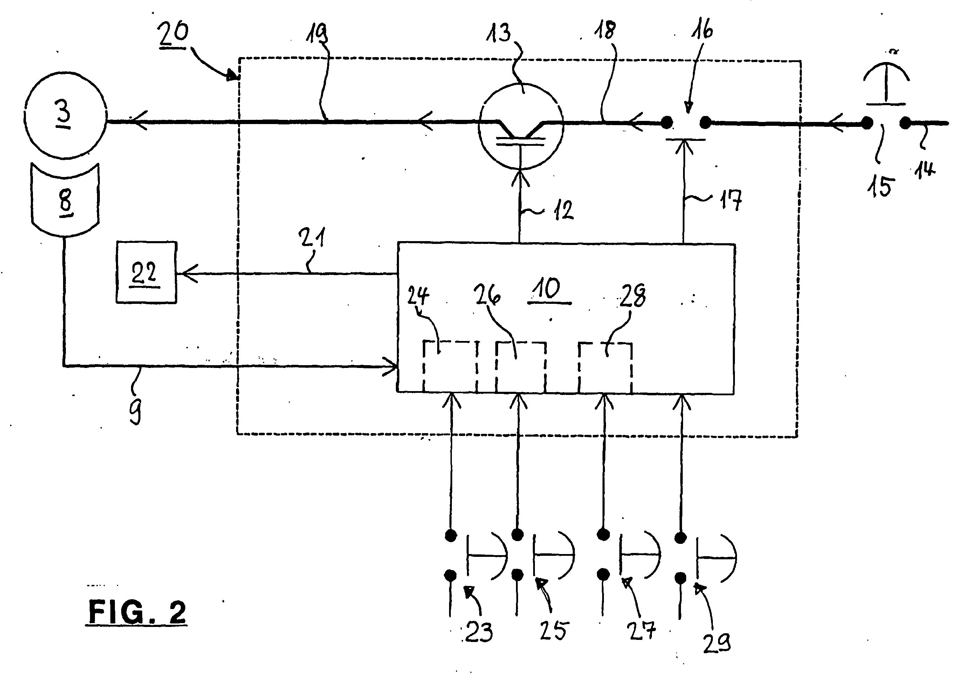

Von der Federwelle 6, die eine Länge von 50 Metern oder mehr haben kann, ist nur ein kurzer Abschnitt gezeigt. An dem trommelfernen Ende ist eines der hier nicht gezeigten Reinigungswerkzeuge befestigt, die in der Beschreibungseinleitung beispielhaft näher beschrieben sind. Dem Motor 3 ist ein Drehzahlsensor 8 zugeordnet, der berührungsfrei auf rotierende magnetische Impulse reagiert. Der Ausgang des Drehzahlsensors 8, der auch auf Betriebsstörungen wie einen Stillstand anspricht, ist über eine Leitung 9 einem Mikroprozessor 10 aufgeschaltet, von dem wesentliche Einzelheiten anhand der Figur 2 noch näher erläutert werden.

Dies gilt auch für eine Gruppe 11 von Eingabetasten für die Eingabe und Abspeicherung von Sollwerten für verschiedene Betriebsmodi. In dem Mikroprozessor 10 findet ein Vergleich zwischen den über die Leitung 9 erhaltenen Drehzahl-Istwerten und den eingespeicherten Drehzahl-Sollwerten statt. Entsprechend dem Ergebnis dieser Vergleiche wird über eine Leitung 12 ein Leistungssteuerelement 13 angesteuert, das als TRIAC ausgeführt ist und nach dem Prinzip der Phasenanschnittsteuerung für eine Schlupfregelung arbeitet.

Der Betriebsstrom wird über eine Leitung 14 zugeführt, in der sich nacheinander ein manuell zu betätigender Hauptschalter 15 und eine Abschalteinrichtung 16 befinden, die wiederum über eine Leitung 17 vom Mikroprozessor 10 angesteuert wird und bei einer Betriebsstörung, beispielsweise bei einem Stillstand des Motors 3, eine Abschaltung bewirkt. Der Abschalteinrichtung 16 folgt über eine Leitung 18 das Leistungssteuerelement 13, mit dem der Betriebsstrom quasi kontinuierlich gesteuert bzw. geregelt wird. Eine weitere Leitung 19 führt dann zum Motor 3. Die gesamte Anordnung ist zu einer Antriebssteuereinrichtung 20 zusammengefasst. Vom Mikroprozessor 10 führt noch eine weitere Leitung 21 zu einer Anzeigeeinrichtung 22 für die optische Anzeige von Betriebsdaten.

Anhand von Figur 2 sind - unter Verwendung der bisherigen Bezugszeichen - weitere Einzelheiten dargestellt: Durch eine Eingabetaste 23 wird einem Speicherplatz 24 ein Drehzahl-Sollwert zugeführt, der einer Drehzahl knapp unterhalb des Leerlaufs entspricht. Man kann einen Vorgang mit einer solchen Drehzahl und knapp darunter auch analog zur spanabhebenden Bearbeitung von Werkstücken als "Schlichten" bezeichnen. Durch eine Eingabetaste 25 wird einem Speicherplatz 26 eine Folge von unterschiedlichen Drehzahl-Sollwerten zugeführt, was auch ein Pulsieren des Betriebsstroms und des sich daraus ergebenden Drehmoments zur Folge hat. Innerhalb einer Frequenz wird der TRIAC für ein bestimmtes Zeitintervall voll durchgezündet, so dass der Motor 3 beschleunigt. Dieser Puls wirkt sich auf die Drehzahl und das Drehmoment aus und wird an das Werkzeug weitergegeben. Die Folge ist eine verbesserte und verstärkte Beseitigung einer Verstopfung.

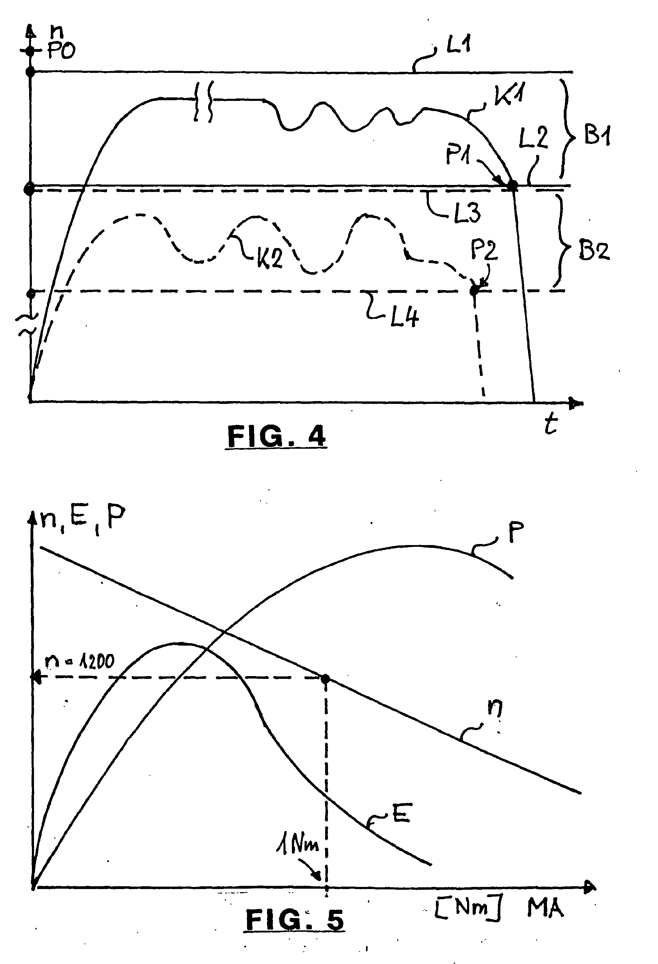

Durch eine Eingabetaste 27 wird einem Speicherplatz 28 ein Drehzahl-Sollwert zugeführt, der einer Drehzahl deutlich unterhalb des Leerlaufs entspricht. Man kann einen solchen Vorgang auch analog zur spanabhebenden Bearbeitung von Werkstücken als "Schruppen" bezeichnen. Eine weitere Eingabetaste 29 dient zur Eingabe von Start/Stopp-Befehlen. Beim Erreichen einer vorgegeben Grenzdrehzahl zündet der Mikroprozessor 10 den TRIAC nicht weiter. Der Motor 3 erhält keine Spannung und bleibt gefahrlos stehen. Die Anzeigeeinrichtung zeigt dies als Störung an. Nach einem Reset kann erneut gestartet werden. Bezüglich weiterer Zusammenhänge wird auf Figur 4 verwiesen.

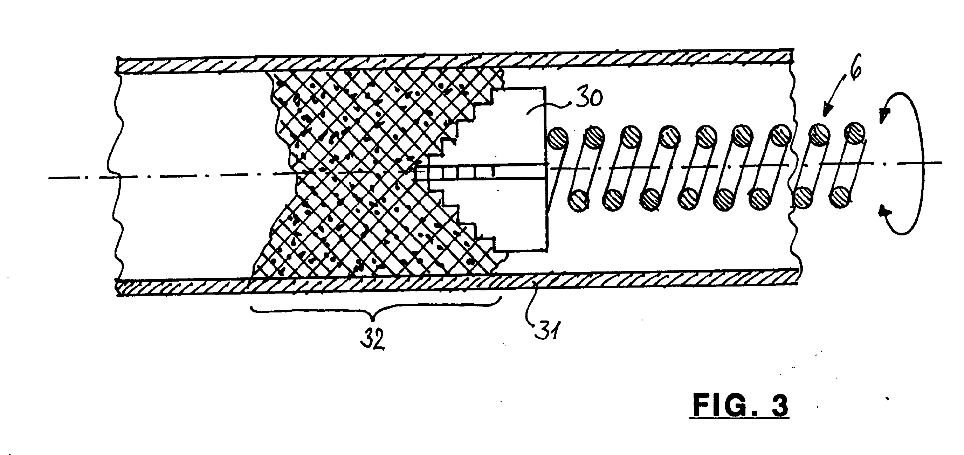

Die Figur 3 zeigt sehr schematisch die Arbeitsweise einer Federwelle 6 mit einem Werkzeug 30, hier einem Kreuzblattbohrer, innerhalb einer Rohrleitung 31, die durch eine erste Verunreinigung 32 unbekannter Zusammensetzung und Festigkeit verstopft ist. Bis zum Auftreffen auf diese Verunreinigung, hatte der Motor 3 nur die üblichen Antriebs- und Reibungskräfte der Federwelle 6 zu überwinden. Dies änderte sich jedoch schlagartig beim Auftreffen des Werkzeugs 30 auf die Verunreinigung 32. Der stark ansteigende Bedarf an Drehmoment äussert sich in einer Tordierung der Federwelle 6 über deren gesamte freie Länge und damit einer Abnahme der Drehzahl des Werkzeugs 30 bis ggf. zum Stillstand.

Die Zunahme des Antriebsdrehmoments erreicht den Motor 3 erst mit einiger Verzögerung, und der Endwert wird erst dann erreicht, wenn die Federwelle zumindest über ihre gesamte freie Länge gleichmässig tordiert ist. Der Motor 3 versucht, den Drehzahlverlust wieder aufzuholen, was den Energieinhalt der Trommel 1 und der Federwelle 6 aber weiter steigert. Dann aber ist auch die Federwelle ein erheblicher Energiespeicher.

Sobald das Werkzeug 30 die Verunreinigung 32 durchbrochen hat, entlädt sich die gespeicherte Energie ggf. einschliesslich der Rotationsernergie des sich noch drehenden Motors 3 und der Trommel 1 mit dem Inhalt der Federwelle 6, bis sich der Vorgang nach einiger Zeit stabilisiert hat. Die Verhältnisse werden aber erneut gestört, sobald ein neues Hindernis in der Rohrleitung 31 auftaucht.

Die Figur 4 erläutert nun die elektromechanischen Vorgänge auf der Seite des Motors 3 und des Mikroprozessors 10. Auf der Abszisse ist die Zeit t aufgetragen, auf der Ordinate die Drehzahl n. Der oberste Punkt PO steht für die Nenndrehzahl des Motors 3, beispielsweise 1500 U/min, die Linie L1 steht für die zu erreichende Soll-Drehzahl, beispielsweise 1400 U/min. Nach dem Einschalten des Motors 3 steigt die Drehzahl n entsprechend der Kurve K1 sehr steil bis knapp unter L1 an. Nach einiger Zeit erreicht das Werzeug 30 jedoch leichtere Verstopfungen, was sich durch einen wellenförmigen Verlauf der Kurve K1 äussert. Schliesslich trifft das Werkzeug 30 auf eine hartnäckige Verstopfung, z.B. gemäss Figur 3, was zu einem Steilabfall der Kurve K1 führt. Um eine überlastung des Systems zu vermeiden, wurde im Mikroprozessor ein zweiter, geringerer Sollwert für die Drehzahl n, beispielsweise n = 1200 U/min, gesetzt, der hier durch die Linie L2 dargestellt ist. Schneidet die Kurve K1 die Linie L2 im Punkt P1, dann wird die Stromzufuhr zum Motor 3 unterbrochen und dieser kommt bis zum erneuten Anfahren zum Stillstand. Der durch zwei Drehzahl-Sollwerte definierte Bereich B1 zwischen den Linien L1 und L2, in dem die Motor-Drehzahl schwanken kann, kann auch als "Schlichtbereich" bezeichnet werden.

Unter dem Bereich B1 ist ein zweiter Bereich B2 dargestellt, der auch als "Schruppbereich" bezeichnet werden kann, also für gröbere Reinigungsarbeiten vorteilhaft ist. Die obere Linie L3 für eine Begrenzung des Drehzahl-Sollwerts kann deckungsgleich mit der Linie L2 sein, also für n =1200 U/min stehen, muss dies aber nicht. Nach unten hin ist der Bereich B2 durch eine Linie L4 begrenzt, die beispielhaft für einen unteren Drehzahl-Sollwert von 1000 U/min steht. Hier können weitere Schwankungen der Motor-Drehzahl gemäss der Wellenlinie in der Kurve K2 auftreten. Es ist jedoch zum Lösen hartnäckiger Verstopfungen besonders vorteilhaft, die gespeicherten Sollwerte alternierend im Drehzahlbereich B2 zwischen L3 und L4 umzuschalten, um einen Impulsbetrieb zu erhalten. Der tiefer liegende Drehzahlbereich B2 sorgt für deutlich geringere Massenkräfte, da diese vom Quadrat der Drehzahl abhängig sind. Unterschreitet die Ist-Drehzahl gemäss der Kurve K2 den Drehzahl-Sollwert gemäss der Linie L4 im Punkte P2, dann wird die Stromzufuhr zum Motor 3 gleichfalls unterbrochen. Der Begriff Sollwert kann auch als Festwert oder als Führungsgrösse für den beschriebenen Prozess verstanden werden.

Die Figur 5 zeigt die üblichen Abhängigkeiten der Drehzahl n, der Leistung P (Power) und des Wirkungsgrades E (Effektivität) vom Antriebsdrehmoment MA, gerechnet in Newtonmeter Nm. Von besonderem Interesse ist hierbei der Zusammenhang zwischen der Torsionsfestigkeit der Federwelle bzw. dem maximal zulässigen Antriebsdrehmoment und der entsprechenden Motordrehzahl, ggf. unter Berücksichtigung von übersetzungen. Sind diese Zusammenhänge bekannt, dann lässt sich, ausgehend von dem beispielhaften Wert 1 Nm entsprechend der gestrichelten Linie in Richtung des Pfeils die maximal zulässige Motordrehzahl n = 1200 U/min für den Schruppbereich B2 bestimmen. Hierfür ist der Mikroprozessor 10 entsprechend ausgelegt.

### Bezugszeichenliste:

- 1: Trommel
- 2: Riemenscheibe
- 3: Motor
- 4: Riemenscheibe
- 5: Keilriemen
- 6: Federwelle
- 7: Vorschubeinrichtung
- 8: Drehzahlsensor
- 9: Leitung
- 10: Mikroprozessor
- 11: Gruppe
- 12: Leitung
- 13: Leistungssteuerelement
- 14: Leitung
- 15: Hauptschalter
- 16: Abschalteinrichtung
- 17: Leitung
- 18: Leitung
- 19: Leitung
- 20: Antriebssteuereinrichtung
- 21: Leitung
- 22: Anzeigeeinrichtung
- 23: Eingabetaste
- 24: Speicherplatz
- 25: Eingabetaste
- 26: Speicherplatz
- 27: Eingabetaste
- 28: Speicherplatz
- 29: Eingabetaste.
- 30: Werkzeug
- 31: Rohrleitung
- 32: Verunreinigung

- B1: Bereich
- B2: Bereich
- E: Wirkungsgrad
- PO: Punkt
- K1: Kurve
- K2: Kurve
- L1: Linie
- L2: Linie
- L3: Linie
- L4: Linie
- M: Rohrreinigungsmaschine
- MA: Antriebsdrehmoment
- n: Drehzahl
- P: Leistung
- P1: Punkt
- P2: Punkt

## Patentansprüche

1. Verfahren zum Steuern der Antriebsleistung einer elektromotorischen Reinigungsmaschine für Rohrleitungen und Kanäle mittels einer rotierenden gewendelten Federwelle (6), mit einem Motor (3) und einer von diesem angetriebenen drehbaren Trommel (1) für den Antrieb, die Aufnahme und Ausgabe der Federwelle (6), an deren trommelfernem Ende sich rotierende Reinigungswerkzeuge (30) befinden, **dadurch gekennzeichnet, dass**
a) die Drehzahl des Motors (3) durch einen Drehzahlsensor (8) erfasst und ein der jeweiligen Drehzahl proportionales Signal an einen Mikroprozessor (10) weitergegeben wird,
b) in dem Mikroprozessor (10) ein Vergleich des Drehzahl-Istwerts mit mindestens einem gespeicherten Drehzahl-Sollwert durchgeführt wird,
c) durch den Mikroprozessor (10) ein Leistungssteuerelement (13) für den Betriebsstrom derart im Sinne einer Schlupfsteuerung angesteuert wird, dass der Motor (3) beim Absinken seiner Drehzahl unter den jeweils relevanten unteren Drehzahl-Sollwert abgeschaltet wird, und dass
d) die Leistungszufuhr zum Motor (3) beim Ausbleiben von Drehzahlsignalen unterbrochen wird.

2. Verfahren nach Anspruch 1, **dadurch gekennzeichnet, dass** in dem Mikroprozessor (10) Drehzahl-Sollwerte für mindestens zwei Drehzahl-Bereiche (B1, B2) gespeichert werden, deren untere Drehzahl-Sollwerte gegeneinander abgestuft sind, und dass beim Unterschreiten des unteren Drehzahl-Sollwerts des oberen Drehzahl-Bereichs (B1) der Motor im unteren Drehzahl-Bereich (B2) neu gestartet wird.

3. Verfahren nach Anspruch 2, **dadurch gekennzeichnet, dass** in dem Mikroprozessor (10) vier Drehzahl-Sollwerte gespeichert werden, die den oberen Drehzahl-Bereich (B1) und den unteren Drehzahl-Bereich (B2) begrenzen, und dass der obere Drehlzahl-Bereich (B1) beim Unterschreiten einer Mindestdrehzahl dieses Bereichs auf den unteren Drehzahl-Bereich (B2) umgeschaltet wird.

4. Verfahren nach Anspruch 2, **dadurch gekennzeichnet, dass** in dem Mikroprozessor (10) innerhalb des jeweiligen Drehzahl-Bereichs (B1, B2) ein periodischer Vergleich zwischen den gespeicherten höheren und niedrigeren Drehzahl-Sollwerten des Drehzahl-Bereichs (B1, B2) durchgeführt wird, derart, dass der Mikroprozessor (10) das Leistungssteuerelement (13) im Sinne pulsierender Leistungszufuhr zum Motor (3) ansteuert.

5. Verfahren nach Anspruch 4, **dadurch gekennzeichnet, dass** in dem Mikroprozessor (10) die pulsierende Leistungszufuhr zum Motor (3) im unteren Drehzahl-Bereich (B2) durchgeführt wird.

6. Verfahren nach Anspruch 1, **dadurch gekennzeichnet, dass** als Leistungssteuerelement (13) ein TRIAC verwendet wird.

7. Verfahren nach Anspruch 1, **dadurch gekennzeichnet, dass** als Motor (3) ein Asynchron-Motor verwendet wird.

8. Reinigungsmaschine zum Reinigen von Rohrleitungen und Kanälen mittels rotierender gewendelter Federwellen (6), mit einem Motor (3) und einer von diesem antreibbaren drehbaren Trommel (1) für den Antrieb, die Aufnahme und Ausgabe der Federwellen (6), an deren trommelfernem Ende sich rotierbare Reinigungswerkzeuge (30) befinden, **dadurch gekennzeichnet, dass**
a) für die Erfassung der Drehzahl des Motors (3) ein Drehzahlsensor (8) für ein der Drehzahl proportionales Signal vorhanden ist,
b) der Drehzahlsensor (8) einem Mikroprozessor (10) aufgeschaltet ist,
c) in dem Mikroprozessor (10) ein Vergleich des Drehzahl-Istwerts mit mindestens einem in Speicherplätzen (24, 26, 28) gespeicherten Drehzahl-Sollwert durchführbar ist,
d) durch den Mikroprozessor (10) ein Leistungssteuerelement (13) für den Betriebsstrom derart im Sinne einer Schlupfsteuerung ansteuerbar ist, dass der Motor (3) beim Absinken seiner Drehzahl unter den jeweils relevanten unteren Drehzahl-Sollwert abschaltbar ist, und dass
e) die Leistungszufuhr zum Motor (3) beim Ausbleiben von Drehzahlsignalen durch den Mikroprozessor (10) unterbrechbar ist.

9. Reinigungsmaschine nach Anspruch 8, **dadurch gekennzeichnet, dass** die gespeicherten Drehzahl-Sollwerte veränderbar sind.

10. Reinigungsmaschine nach Anspruch 8, **dadurch gekennzeichnet, dass** in dem Mikroprozessor (10) Speicherplätze (24, 26, 28) für Drehzahl-Sollwerte für mindestens zwei Drehzahl-Bereiche (B1, B2) angeordnet sind und dass beim Unterschreiten des unteren Drehzahl-Sollwerts des oberen Bereichs (B1) der Motor (3) im unteren Drehzahl-Bereich (B2) neu startbar ist.

11. Reinigungsmaschine nach Anspruch 8, **dadurch gekennzeichnet, dass** in dem Mikroprozessor (10) Speicherplätze (24, 26, 28) für vier Drehzahl-Sollwerte angeordnet sind, durch die ein oberer Drehzahl-Bereich (B1) und ein unterer Drehzahl-Bereich (B2) begrenzbar sind, und dass der obere Drehlzahl-Bereich (B1) beim Unterschreiten einer Mindestdrehzahl dieses Bereichs auf den unteren Drehzahl-Bereich (B2) umschaltbar ist.

12. Reinigungsmaschine nach Anspruch 8, **dadurch gekennzeichnet, dass** in dem Mikroprozessor (10) innerhalb des jeweiligen Bereichs (B1, B2) ein periodischer Vergleich zwischen den gespeicherten höheren und niedrigeren Drehzahl-Sollwerten des Drehzahl-Bereichs (B1, B2) durchführbar ist, derart, dass durch den Mikroprozessor (10) das Leistungssteuerelement (13) im Sinne pulsierender Leistungszufuhr zum Motor (3) ansteuerbar ist.

13. Reinigungsmaschine nach Anspruch 12, **dadurch gekennzeichnet, dass** in dem Mikroprozessor (10) die pulsierende Leistungszufuhr zum Motor (3) im unteren Drehzahl-Bereich (B2) durchführbar ist.

14. Reinigungsmaschine nach Anspruch 8, **dadurch gekennzeichnet, dass** der Mikroprozessor (10) mindestens zwei Speicherplätze (24, 26, 28) für Drehzahl-Sollwerte aufweist und dass durch eine Vergleichsschaltung diese Drehzahl-Sollwerte mit dem jeweils erfassten Drehzahl-Istwert vergleichbar sind und dass der Ausgang des Mikroprozessors (10) dem Leistungssteuerelement (13) aufgeschaltet ist.

15. Reinigungsmaschine nach Anspruch 8, **dadurch gekennzeichnet, dass** das Leistungssteuerelement (13) ein TRIAC ist.

16. Reinigungsmaschine nach Anspruch 8, **dadurch gekennzeichnet, dass** der Motor (3) ein Asynchron-Motor ist.

17. Reinigungsmaschine nach Anspruch 8, **dadurch gekennzeichnet, dass** der Mikroprozessor (13) einer Anzeigeeinrichtung (22) aufgeschaltet ist.

## Claims

1. A method for controlling the drive power of an electric motorized cleaning machine for pipelines and ducts by means of a rotating coiled spring shaft (6), having a motor (3) and a rotatable drum (1) driven by the same for driving, receiving, and outputting the spring shaft (6), rotating cleaning tools (30) being present on the end thereof away from the drum,
**characterized in that**
a) the speed of the motor (3) is detected by a speed sensor (8) and a signal proportional to the speed is passed to a microprocessor (10),
b) a comparison of the actual speed value to at least one stored target speed value is performed in the microprocessor (10),
c) a power control element (13) for the operating current is actuated by the microprocessor (10) as a slip controller, such that the motor (3) is switched off when the speed thereof falls below the relevant lower target speed value, and that
d) the power feed to the motor (3) is interrupted when speed signals remain absent.

2. The method according to claim 1, **characterized in that** target speed values for at least two speed ranges (B1, B2) are stored in the microprocessor (10), the lower target speed values being graduated relative to each other, and that when the motor speed falls below the lower target speed value of the upper speed range (B1) the motor is started again in the lower speed range (B2).

3. The method according to claim 2, **characterized in that** four target speed values are stored in the microprocessor (10), bounding the upper speed range (B1) and the lower speed range (B2), and that a switch is made from the upper speed range (B1) to the lower speed range (B2) when the motor speed falls below a minimum speed of said upper speed range.

4. The method according to claim 2, **characterized in that** a periodic comparison is performed within each speed range (B1, B2) in the microprocessor (10) between the stored higher and lower target speed values of the speed range (B1, B2), such that the microprocessor (10) actuates the power control element (13) as a pulsing power feed to the motor (3).

5. The method according to claim 4, **characterized in that** the pulsing power feed to the motor (3) is performed in the microprocessor (10) in the lower speed range (B2).

6. The method according to claim 1, **characterized in that** a TRIAC is used as the power control element (13).

7. The method according to claim 1, **characterized in that** an asynchronous motor is used as the motor (3).

8. A cleaning machine for cleaning pipelines and ducts by means of rotating coiled spring shafts (6), having a motor (3) and a rotatable drum (1) that can be driven thereby for driving, receiving, and outputting the spring shafts (6), rotating cleaning tools (30) being present at the end thereof away from the drum, **characterized in that**
a) a speed sensor (8) for a signal proportional to the speed is present for detecting the speed of the motor (3),
b) the speed sensor (8) is connected to a microprocessor (10),
c) a comparison of the actual speed value and at least one target speed value stored in memory locations (24, 26, 28) can be performed in the microprocessor (10),
d) a power control element (13) for the operating current can be actuated by the microprocessor (10) as a slip controller, such that the motor (3) can be switched off when the speed thereof falls below the relevant lower target speed value, and that
e) the power feed to the motor (3) can be interrupted by the microprocessor (10) when speed signals remain absent.

9. The cleaning machine according to claim 8, **characterized in that** the stored target speed values can be changed.

10. The cleaning machine according to claim 8, **characterized in that** memory locations (24, 26, 28) are disposed in the microprocessor (10) for target speed values for at least two speed ranges (B1, B2) and that when the motor speed falls below the lower target speed value of the upper range (B1) the motor (3) can be started again in the lower speed range (B2).

11. The cleaning machine according to claim 8, **characterized in that** memory locations (24, 26, 28) for four target speed values are disposed in the microprocessor (10, by which an upper speed range (B1) and a lower speed range (B2) can be bounded, and that a switch can be made from the upper speed range (B1) to the lower speed range (B2) when the motor speed falls below a minimum speed of said upper speed range.

12. The cleaning machine according to claim 8, **characterized in that** a periodic comparison can be performed within each speed range (B1, B2) in the microprocessor (10) between the stored higher and lower target speed values of the speed range (B1, B2), such that the microprocessor (10) actuates the power control element (13) as a pulsing power feed to the motor (3).

13. The cleaning machine according to claim 12, **characterized in that** the pulsing power feed to the motor (3) can be performed in the microprocessor (10) in the lower speed range (B2).

14. The cleaning machine according to claim 8, **characterized in that** the microprocessor (10) comprises at least two memory locations (24, 26, 28) for target speed values, and that said target speed values can be compared to the detected actual speed value by a comparison circuit, and that the output of the microprocessor (10) is connected to the power control element (13).

15. The cleaning machine according to claim 8, **characterized in that** the power control element (13) is a TRIAC.

16. The cleaning machine according to claim 8, **characterized in that** the motor (3) is an asynchronous motor.

17. The cleaning machine according to claim 8, **characterized in that** the microprocessor (13) is connected to a display device (22).

## Revendications

1. Procédé pour réguler la puissance motrice d'une machine de nettoyage à moteur électrique pour les conduits de tuyaux et les canalisations au moyen d'un arbre rainuré spiralé rotatif (6), avec un moteur (3) et un tambour (1) rotatif entraîné par ledit moteur (3) pour l'entraînement, l'accueil et la sortie de l'arbre rainuré (6), dont l'extrémité éloignée du tambour (1) comporte des outils de nettoyage rotatifs (30),
**caractérisé en ce que**
a) le régime du moteur (3) est détecté par un capteur de régime (8) et un signal proportionnel au régime est transmis à un microprocesseur (10),
b) une comparaison de la valeur de régime réelle avec au moins une valeur de régime de consigne mémorisée est effectuée dans le microprocesseur (10),
c) le microprocesseur (10) commande un élément de régulation de puissance (13) pour le courant de service au sens d'une régulation de glissement de manière à ce que le moteur (3) soit arrêté en cas de baisse de son régime en-deçà de la valeur de régime de consigne inférieure pertinente, et que
d) d) l'alimentation en puissance du moteur (3) soit interrompue en cas d'absence de signaux de régime.

2. Procédé selon la revendication 1, **caractérisé en ce que** dans le microprocesseur (10), des valeurs de régime de consigne sont enregistrées pour au moins deux plages de régime (B1, B2), dont les valeurs de régime de consigne inférieures sont échelonnées l'une par rapport à l'autre, et que le moteur est redémarré dans la plage de régime inférieure (B2) en cas de baisse du régime en-deçà de la valeur de régime de consigne inférieure de la plage de régime supérieure (B1).

3. Procédé selon la revendication 2, **caractérisé en ce que** quatre valeurs de régime de consigne sont enregistrées dans le microprocesseur (10), qui limitent la plage de régime supérieure (B1) et la plage de régime inférieure (B2), et que la plage de régime supérieure (B1) est commuté sur la plage de régime inférieure (B2) en cas de baisse du régime en-deçà d'un régime minimal de cette plage.

4. Procédé selon la revendication 2, **caractérisé en ce que** dans le microprocesseur (10), une comparaison périodique est effectuée au sein de chacune des plages de régime (B1, B2) entre les valeurs de régime de consigne relativement élevées et relativement basses enregistrées de la plage de régime (B1, B2), de manière à ce que le microprocesseur (10) commande l'élément de régulation de puissance (13) dans le sens d'une alimentation en puissance pulsée au moteur (3).

5. Procédé selon la revendication 4, **caractérisé en ce que** dans le microprocesseur (10), l'alimentation en puissance pulsée au moteur (3) est effectuée dans la plage de régime inférieure (B2).

6. Procédé selon la revendication 1, **caractérisé en ce que** l'élément de régulation de pression (13) utilisé est un thyristor triode bidirectionnel (TRIAC).

7. Procédé selon la revendication 1, **caractérisé en ce que** le moteur (3) utilisé est un moteur asynchrone.

8. Machine de nettoyage pour le nettoyage de conduits de tuyaux et de canalisations au moyen d'arbres rainurés spiralés rotatifs (6), avec un moteur (3) et un tambour (1) rotatif pouvant être entraîné par ledit moteur (3) pour l'entraînement, l'accueil et la sortie des arbres rainurés (6), dont l'extrémité éloignée du tambour (1) comporte des outils de nettoyage rotatifs (30), **caractérisée en ce que**
a) pour la détection du régime du moteur (3), il existe un capteur de régime (8) pour un signal proportionnel au régime,
b) le capteur de régime (8) est branché sur un microprocesseur (10),
c) dans le microprocesseur (10), une comparaison de la valeur de régime réelle avec au moins une valeur de régime de consigne mémorisée dans des positions de mémoire (24, 26, 28) peut être effectuée,
d) le microprocesseur (10) peut commander un élément de régulation de puissance (13) pour le courant de service au sens d'une régulation de glissement de manière à ce que le moteur (3) puisse être arrêté en cas de baisse de son régime en-deçà de la valeur de régime de consigne inférieure pertinente, et que
e) l'alimentation en puissance du moteur (3) peut être interrompue en cas d'absence de signaux de régime provenant du microprocesseur (10).

9. Machine de nettoyage selon la revendication 8, **caractérisée en ce que** les valeurs de régime de consigne mémorisées sont modifiables.

10. Machine de nettoyage selon la revendication 8, **caractérisée en ce que** des positions de mémoire (24, 26, 28) pour des valeurs de régime de consigne pour au moins deux plages de régime (B1, B2) sont disposées dans le microprocesseur (10) et que le moteur (3) peut être redémarré dans la plage de régime inférieure (B2) en cas de baisse du régime en-deçà de la valeur de régime de consigne inférieure de la plage de régime supérieure (B1).

11. Machine de nettoyage selon la revendication 8, **caractérisée en ce que** des positions de mémoire (24, 26, 28) pour quatre valeurs de consigne de régime sont disposées dans le microprocesseur (10), avec lesquels une plage de régime supérieure (B1) et une plage de régime inférieure (B2) peuvent être limitées, et que la plage de régime supérieure (B1) peut être commutée sur la plage de régime inférieure (B2) en cas de baisse du régime en-deçà d'un régime minimal de cette plage.

12. Machine de nettoyage selon la revendication 8, **caractérisée en ce que** dans le microprocesseur (10), une comparaison périodique peut être effectuée au sein de chacune des plages de régime (B1, B2) entre les valeurs de régime de consigne relativement élevées et relativement basses enregistrées de la plage de régime (B1, B2), de telle manière que le microprocesseur (10) puisse commander l'élément de régulation de puissance (13) dans le sens d'une alimentation en puissance pulsée au moteur (3).

13. Machine de nettoyage selon la revendication 12, **caractérisée en ce que** dans le microprocesseur (10), l'alimentation en puissance pulsée au moteur (3) peut être effectuée dans la plage de régime inférieure (B2).

14. Machine de nettoyage selon la revendication 8, **caractérisée en ce que** le microprocesseur (10) comporte au moins deux positions de mémoire (24, 26, 28) pour des valeurs de régime de consigne, qu'à l'aide d'un circuit de comparaison, ces valeurs de régime de consigne peuvent être comparées avec la valeur de régime réelle respectivement mesurée et que la sortie du microprocesseur (10) est branchée sur l'élément de régulation de puissance (13).

15. Machine de nettoyage selon la revendication 8, **caractérisée en ce que** l'élément de régulation de puissance (13) est un thyristor triode bidirectionnel (TRIAC).

16. Machine de nettoyage selon la revendication 8, **caractérisée en ce que** le moteur (3) est un moteur asynchrone.

17. Machine de nettoyage selon la revendication 8, **caractérisée en ce que** le microprocesseur (10) est branché sur un dispositif d'affichage (22).
